# EUROPEAN PATENT APPLICATION

(11) **EP 4 807 392 A1**
(43) Date of publication of application: **16.09.2026**
(21) Application number: 24889042.8
(22) Date of filing: 01.11.2024
(51) Int. Cl.: G01S 7/481, G01S 7/497, G01S 7/484, G01S 7/4863

(54) **LIDAR SENSOR CAPABLE OF SECURING TOLERANCE MARGIN FOR OPTICAL ALIGNMENT AND DRIVING SYSTEM THEREFOR**

(30) Priority: 06.11.2023 KR 20230151894
(71) Applicant: Hyundai Mobis Co., Ltd., Gangnam-gu Seoul 06141 (KR); LG Innotek Co., Ltd., Seoul 07796 (KR)
(72) Inventor: JO, Sung Eun, Yongin-si Gyeonggi-do 16891 (KR); RA, Hyun Woon, Yongin-si Gyeonggi-do 16891 (KR); PARK, Bum Jin, Yongin-si Gyeonggi-do 16891 (KR)
(74) Representative: Vossius & Partner Patentanwälte Rechtsanwälte mbB
(86) International application number: PCT/KR2024/017018
(87) International publication number: WO 2025/100854

(57) **Abstract**

The present invention relates to a driving system for a lidar sensor capable of securing a tolerance margin for optical alignment. Specifically, the present invention relates to a technology that can improve the accuracy and reliability of a lidar sensor by minimizing the occurrence of misalignment of the lidar sensor through securing a more flexible tolerance margin for optical alignment via controlling the arrangement structure of a light source on the basis of an alignment coefficient.

## Description

### BACKGROUND

### 1. Field of the Invention

The present invention relates to a lidar sensor capable of securing a tolerance margin for optical alignment and a driving system therefor, and more particularly, to a lidar sensor capable of securing a tolerance margin for optical alignment and a driving system therefor, the lidar sensor being capable of controlling an arrangement design of a light source array to allow a mitigated alignment tolerance between a light source and a photodetector and performing an operation of securing an alignment tolerance margin by using the arrangement design.

### 2. Description of the Related Art

Lidar (light detection and ranging) refers to a sensor configured to provide three-dimensional data, and the lidar generally measures a distance to an object by measuring a round-trip time of light by using a laser. Because the lidar uses a laser having a short wavelength, the lidar provides an advantage in that precision and resolution are high, and three-dimensional recognition may be performed in accordance with objects.

The lidar generally includes a transmitting part, a receiving part, a driving part, and a signal processing part and has a housing (window) for protecting optical components from an external environment. Because the lidar transmits a pulsed laser and receives a laser reflected by an object (e.g., a target or the like), precise optical alignment between the transmitting part and the receiving part is required.

In particular, in the case of a flash lidar, because both a light source and a detector are configured as a 2D array, a high-precision optical alignment technology is required.

More specifically, the flash lidar generally includes a light source array (M * N) configured as a 2D array, and a photodetector array (P * Q) configured as a 2D array likewise, and as described above, a high-precision optical alignment technology is required.

The detector collects reflected laser signals by simultaneously operating all pixels in one line (1 * Q) or adjacent pixels in P_i * Q_j, and the light source also transmits a pulsed laser by simultaneously operating adjacent light sources (emitters) in one line (1 * N) or (M_i * N_j) corresponding to the detector.

In theory, precise laser transmission and reception may be performed only when the light source and the photodetector are aligned pixel by pixel. However, because it is practically difficult to implement the configuration in which the light source and the photodetector are aligned pixel by pixel, the light source and the photodetector are generally aligned line by line. However, because a reception rate for a signal is rapidly reduced in case that misalignment occurs, a very precise alignment tolerance is required, and therefore, a high-precision optical alignment technology is required.

In case that production is performed in accordance with the precise alignment tolerance, problems occur in which yield is reduced, optical alignment is very highly likely to be distorted due to various external factors (temperature, vibration, impact, and the like) while a device to which a lidar sensor is applied (e.g., a vehicle having front/rear bumpers on which lidar sensors are mounted) operates, and in this case, precision, resolution, and the like of sensing deteriorate.

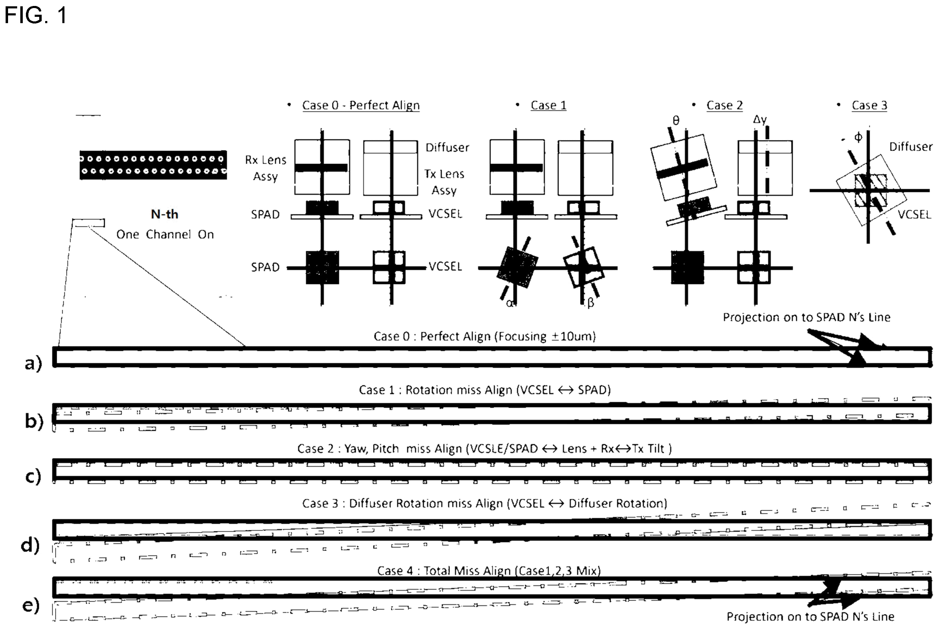

These problems may be represented by various embodiments as illustrated in FIG. 1.

In case that a) in FIG. 1 indicates a lidar sensor in which high-precision optical alignment is achieved, the alignment is distorted due to various reasons as illustrated in b) to e) in FIG. 1, and an inevitable result occurs in which precision and resolution deteriorate.

Further, in case that the lidar sensor is limited to be necessarily used only in a fixed environment, the high-precision optical alignment is very unlikely to be distorted, but a limitation in use and application becomes apparent, which causes another problem.

In this regard, Korean Patent No. 10-2558838 ("Apparatus and Method for Correcting Optical Alignment of Lidar Sensor") discloses a technology for detecting optical misalignment and correcting optical alignment.

### SUMMARY

The present invention has been made in an effort to solve the above-mentioned problem, and an object of the present invention is to provide a lidar sensor capable of securing a tolerance margin for optical alignment, in which an arrangement design of a light source array is controlled to allow a mitigated alignment tolerance between a light source and a photodetector that constitute the lidar sensor.

In addition, an object of the present invention is to provide a driving system for a lidar sensor capable of securing a tolerance margin for optical alignment, the driving system being configured to perform driving control in order to secure a mitigated tolerance margin by using the lidar sensor, i.e., allow a mitigated alignment tolerance.

In order to achieve the above-mentioned objects, a lidar sensor configured to secure (i.e., capable of securing) a tolerance margin for optical alignment according to the present invention may include: a light transmitting part including one or more light source arrays arranged in an M * N structure; and a light receiving part including a photodetector array arranged in a P * Q structure, in which the light transmitting part includes a light source array in which an arrangement structure is controlled and designed based on at least one preset alignment coefficient.

In this case, the light transmitting part may include a light source array in which an arrangement design having an (M+a) * N structure is controlled when a preset driving scheme of the lidar sensor is a one-dimensional addressable scheme.

Alternatively, the light transmitting part may include a light source array in which an arrangement design having an (M+a) * (N+2/b) structure is controlled when a preset driving scheme of the lidar sensor is a two-dimensional addressable scheme.

In this case, the alignment coefficient may be set in consideration of preset basic specifications of the lidar sensor.

In order to achieve the above-mentioned objects, a driving system for a lidar sensor configured to secure (i.e., capable of securing) a tolerance margin for optical alignment according to the present invention may be a driving system capable of securing a tolerance margin for optical alignment for the lidar sensor including the light transmitting part and the light receiving part according to the lidar sensor above, and the driving system may include: a controller configured to: control an operating state by setting an activation pattern for the light source array included in the light transmitting part; control an operating state by setting an activation pattern for the photodetector array included in the light receiving part: set the activation pattern for the light source array by using at least one of the arrangement structure of the light source array and the alignment coefficient; and set the activation pattern for the photodetector array by using the activation pattern for the light source array set by the light transmitting part.

In this case, when a driving scheme of the lidar sensor preset by the light transmitting part is a one-dimensional addressable scheme, the controller may be further configured to set an activation pattern so that light sources included in (x+a) * y are simultaneously operated by applying an alignment coefficient a to the number (x) of rows (lines) of the light source array that are simultaneously operated and controlled in a preset manner based on the driving scheme and using the number (y) of columns of the light source array that are simultaneously operated and controlled in a preset manner.

Alternatively, when a driving scheme of the lidar sensor preset by the light transmitting part is a two-dimensional addressable scheme, the controller may be further configured to set an activation pattern so that light sources included in (x+a) * (y+2/b) are simultaneously operated by applying an alignment coefficient "a" to the number (x) of rows (lines) of the light source array that are simultaneously operated and controlled in a preset manner based on the driving scheme and applying an alignment coefficient "b" to the number (y) of columns of the light source array that are simultaneously operated and controlled in a preset manner.

In this case, the controller may further be configured to set an activation pattern so that corresponding photodetectors are simultaneously operated by using rows (lines) and columns of the photodetector array that are simultaneously operated and controlled in a preset manner in accordance with reception region information preset by the light receiving part.

Further, in consideration of optical power for each light source of the light source array included in the light transmitting part, the controller may further be configured to use the number (x) of rows (lines) of the light source array, which are simultaneously operated and controlled in a preset manner based on a preset driving scheme, and the number (y) of columns of the light source array, which are simultaneously operated and controlled in a preset manner and control optical power of the light source operated by the activation pattern for the set light source array so that overall optical power by a basic activation pattern, which is set such that light sources included in x * y are simultaneously operated, is consistent with overall optical power by the activation pattern for the set light source array.

In order to achieve the above-mentioned objects, a driving device for a lidar sensor capable of securing a tolerance margin for optical alignment according to the present invention may include: a light transmitting part including a light source array having M light source lines that are sequentially arranged; and a light receiving part including a photodetector array having "P" sensing lines that are sequentially arranged, the light receiving part being configured to receive an optical signal emitted from the light source line and reflected by an object, in which (1+a) light source lines, among the M light source lines of the light transmitting part, are activated, such that one of the P sensing lines of the light receiving part is activated, and in which "a" is a natural number.

In order to achieve the above-mentioned objects, a driving device for a lidar sensor capable of securing a tolerance margin for optical alignment according to the present invention may include: a light transmitting part including light sources having an M * N arrangement; and a light receiving part including sensors having a P * Q arrangement, the light receiving part being configured to receive an optical signal emitted from the light transmitting part and reflected by an object, in which (a+b) light sources, among the M * N light sources of the light transmitting part, are activated, such that b light source lines, among the P * Q sensors of the light receiving part, are activated, and in which "a" and "b" are natural numbers.

According to the driving system for the lidar sensor capable of securing a tolerance margin for optical alignment according to the present invention described above, the arrangement structure of the light source is controlled based on the alignment coefficient, such that a more flexible tolerance margin for optical alignment is secured, thereby providing an advantage in that mass productivity may be improved by means of an increase in yield and a reduction in production time of the lidar sensor.

In particular, the occurrence of misalignment of the lidar sensor may be minimized, thereby improving reliability and accuracy of the lidar sensor.

In addition, during a process in which operations using the lidar sensor are performed in various fields, misalignment may occur due to various unpredictable external factors (temperature, vibration, impact, and the like), but it is possible to minimize a deterioration in performance of the lidar sensor by means of the secured mitigated alignment tolerance margin.

### BRIEF DESCRIPTION OF THE DRAWINGS

FIG. 1 is an exemplary view illustrating various embodiments related to optical misalignment of a lidar sensor.
FIG. 2 is an exemplary view illustrating activation patterns set by a driving system for a lidar sensor in the related art.
FIGS. 3 and 4 are exemplary views illustrating activation patterns set by a lidar sensor capable of securing a tolerance margin for optical alignment and a driving system therefor according to the embodiment of the present invention.
FIG. 5 is an exemplary view illustrating still another activation pattern set by the driving system for the lidar sensor in the related art.
FIG. 6 is an exemplary view illustrating still another activation pattern set by the lidar sensor capable of securing a tolerance margin for optical alignment and the driving system therefor according to the embodiment of the present invention.
FIG. 7 is an exemplary view illustrating another activation pattern set by the driving system for the lidar sensor in the related art.
FIG. 8 is an exemplary view illustrating another activation pattern set by the lidar sensor capable of securing a tolerance margin for optical alignment and the driving system therefor according to the embodiment of the present invention.

### DETAILED DESCRIPTION

The objects, features, and advantages of the present invention will become more apparent with reference to the following embodiments associated with the accompanying drawings. Specific structural or functional descriptions of embodiments of the present invention are exemplified only for the purpose of explaining the embodiments according to the concept of the present invention, the embodiments according to the concept of the present invention may be carried out in various forms, and it should not be interpreted that the present invention is limited to the embodiments described in this specification or application. Because the embodiments according to the concept of the present invention may be variously changed and may have various forms, specific embodiments will be illustrated in the drawings and described in detail in the present specification or application. However, the descriptions of the specific embodiments are not intended to limit embodiments according to the concept of the present invention to the specific embodiments, but it should be understood that the present invention covers all modifications, equivalents and alternatives falling within the spirit and technical scope of the present invention. The terms such as "first" and/or "second" may be used to describe various constituent elements, but these constituent elements should not be limited by these terms. These terms are used only for the purpose of distinguishing one constituent element from other constituent elements. For example, without departing from the scope according to the concept of the present invention, the first constituent element may be referred to as the second constituent element, and similarly, the second constituent element may also be referred to as the first constituent element. When one constituent element is described as being "connected" or "coupled" to another constituent element, it should be understood that one constituent element can be connected or coupled directly to another constituent element, and an intervening constituent element can also be present between the constituent elements. When one constituent element is described as being "connected directly to" or "coupled directly to" another constituent element, it should be understood that no intervening constituent element is present between the constituent elements. Other expressions, that is, "between" and "just between" or "adjacent to" and "directly adjacent to", for explaining a relationship between constituent elements, should be interpreted in a similar manner. The terms used in the present specification are used only for the purpose of describing particular embodiments and are not intended to limit the present invention. Singular expressions include plural expressions unless clearly described as different meanings in the context. In the present application, it will be appreciated that terms "including" and "having" are intended to designate the existence of characteristics, numbers, steps, operations, constituent elements, and components described herein or a combination thereof, and do not exclude a possibility of the existence or addition of one or more other characteristics, numbers, steps, operations, constituent elements, and components, or a combination thereof in advance. Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present specification. Hereinafter, the present invention will be described in detail by describing the embodiments of the present invention with reference to the accompanying drawings. Like reference numerals indicated in the respective drawings refer to like members.

Further, the system refers to a set of components, which includes devices, apparatuses, and means that are organized and regularly interact to perform a required function.

In general, as illustrated in b) to e) in FIG. 1, because a reception signal is rapidly decreased even when slight misalignment occurs in a lidar sensor in which a light source array and a photodetector array are aligned line by line, high-precision alignment having a very tight alignment tolerance margin is performed.

The high-precision alignment naturally leads to a decrease in yield and an increase in production time, and misalignment may occur due to various factors (temperature, vibration, impact, and the like) during a process in which operations using a lidar sensor are performed in various fields. However, there is a problem in that the tight alignment tolerance margin makes it insufficient to cope with the misalignment occurring during the operation.

In order to solve the above-mentioned problems, a lidar sensor capable of securing a tolerance margin for optical alignment and a driving system therefor according to the embodiment of the present invention are related to a technology capable of controlling an arrangement structure design of a light source array based on an alignment coefficient and providing a driving scheme using the same.

The lidar sensor capable of securing a tolerance margin for optical alignment and the driving system therefor according to the embodiment of the present invention may secure a more flexible tolerance margin for optical alignment, thereby providing an advantage of improving mass production by means of an increase in yield and a decrease in production time.

In addition, during a process in which operations using the lidar sensor are performed in various fields, misalignment may occur due to various external factors (temperature, vibration, impact, and the like), but it is possible to minimize a deterioration in performance of the lidar sensor by means of the secured mitigated alignment tolerance margin.

The lidar sensor applied to the lidar sensor capable of securing a tolerance margin for optical alignment and the driving system therefor according to the embodiment of the present invention may be flash lidar.

The flash lidar includes a light source configured to repeatedly output (emit) a pulsed laser, a transmission lens (condenser lens) configured to transmit the outputted pulsed laser, a scanner configured to obtain three-dimensional data within a wide region, a reception lens configured to collect pulsed laser signals reflected and returned by a target (an object or the like), a detector configured to detect the collected signal, and a signal processing part configured to analyze a distance to the target, a shape of the target, and the like by using a transmission signal and a reception signal.

In particular, the flash lidar includes a light transmitting part including a light source array arranged in a two-dimensional matrix structure having an M * N structure, and a light receiving part including a photodetector array arranged in a two-dimensional matrix structure having a P * Q structure.

The light source is generally configured as a laser, a transmitter, and a vertical cavity surface emitting laser (VCSEL), and a detector is generally configured as a single-photon avalanche diode (SPAD).

The flash lidar may be divided into a 1D addressable scheme or a 2D addressable scheme in accordance with driving schemes.

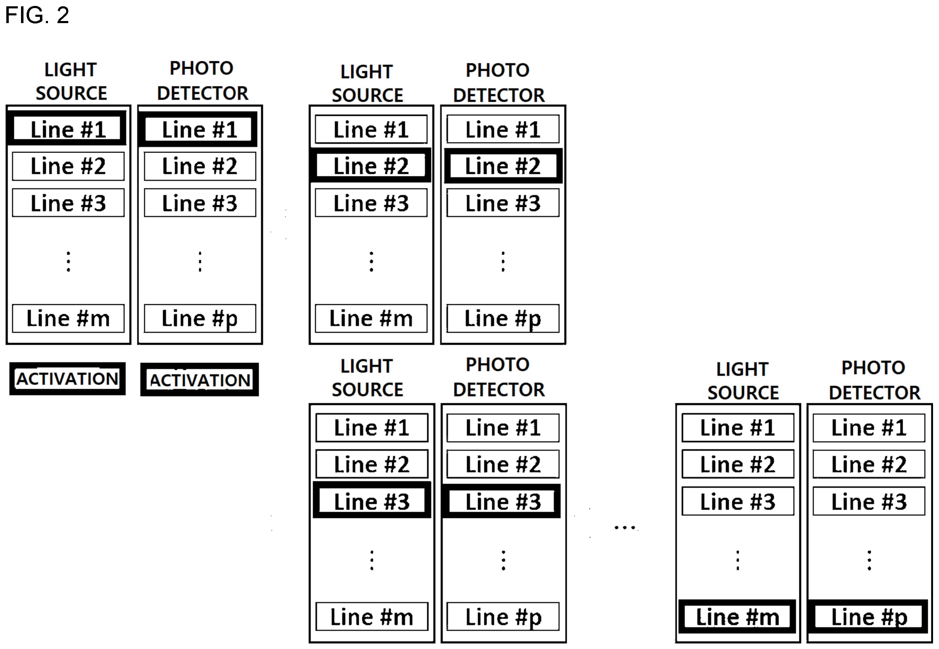

First, in the 1D addressable scheme, as illustrated in FIG. 2, in case that the light source array and the photodetector array are configured in the same arrangement (M = P, N = Q), 1 * N = 1 * Q is achieved, driving control is performed such that all light sources in one line (1 * N) simultaneously emit light, and driving control is correspondingly performed such that all light detection elements in one line (1 * Q) simultaneously detect light.

In this case, as illustrated in FIG. 2, the light sources operate sequentially, one row at a time, based on each of the rows constituting the light source array, and the photodetectors also correspondingly operate sequentially, one row at a time, based on each of the rows constituting the photodetector array.

In order to maximize performance of the lidar sensor based on the driving scheme, as described above, precise alignment between the light source and the photodetector line by line is required.

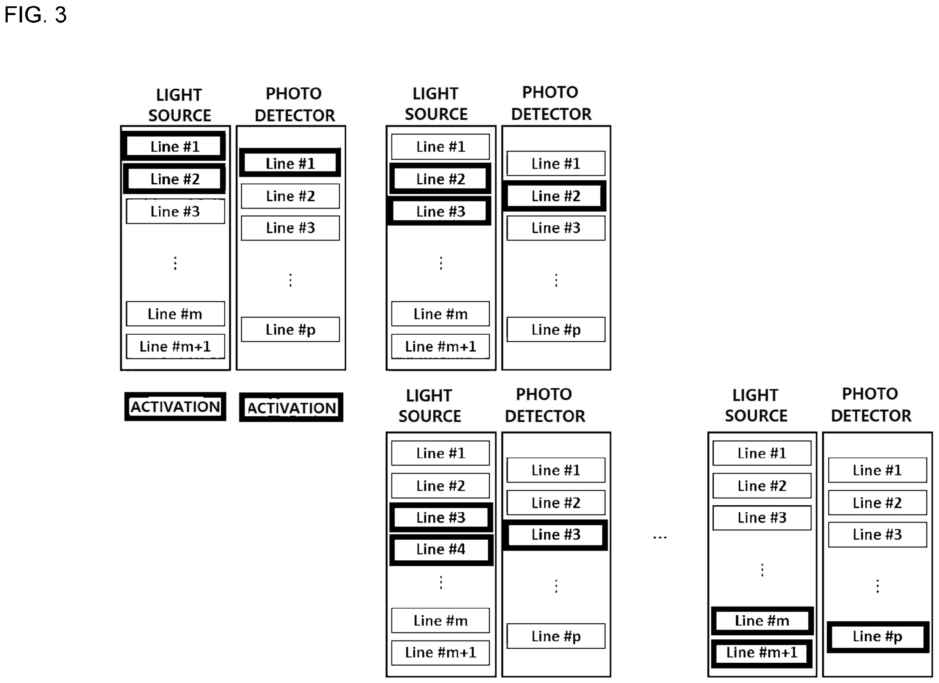

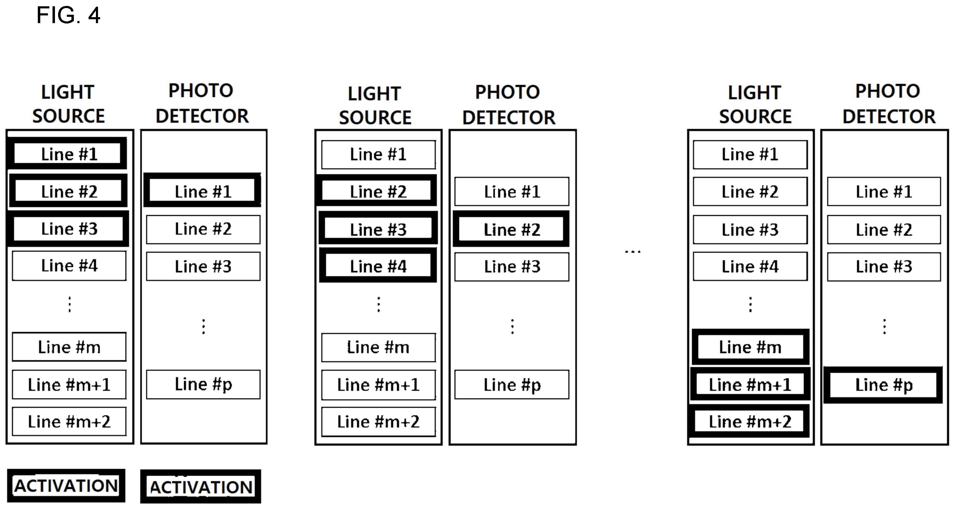

In order to meet this requirement, as illustrated in FIGS. 3 and 4, in the lidar sensor capable of securing a tolerance margin for optical alignment according to the embodiment of the present invention, the arrangement structure of the light source constituting the light source array may be controlled and designed based on at least one preset alignment coefficient.

That is, like a typical lidar sensor, the lidar sensor capable of securing a tolerance margin for optical alignment according to the embodiment of the present invention includes a light transmitting part including a light source array arranged in an M * N structure, and a light receiving part including a photodetector array arranged in a P * Q structure.

In this case, as described above, in the typical lidar sensor, a light source array and a photodetector array are configured in the same arrangement.

In contrast, the lidar sensor capable of securing a tolerance margin for optical alignment according to the embodiment of the present invention includes a light source array in which an arrangement structure of a light source is newly controlled and designed based on at least one preset alignment coefficient.

In detail, in case that the preset driving scheme of the corresponding lidar sensor is the 1D (one-dimensional) addressable scheme, the light transmitting part may include a light source array in which an arrangement design having an (M+a) * N structure is controlled based on a preset alignment coefficient a.

In this case, the alignment coefficient a may be set in accordance with predicted noise in consideration of preset basic specifications of the lidar sensor.

For example, in case that the preset alignment coefficient a is 1, the lidar sensor capable of securing a tolerance margin for optical alignment according to the embodiment of the present invention, as illustrated in FIG. 2, includes a light transmitting part including a light source array arranged in an (M+1) * N structure, and a light receiving part including a photodetector array arranged in a P * Q structure.

As described above, with reference to a driving method in case that a light source array and a photodetector array are configured in different arrangements, the lidar driving system for securing a tolerance margin for optical alignment according to the embodiment of the present invention controls driving by controlling activation patterns of the light source array and the photodetector array by means of a controller.

In detail, the controller may control an operating state by setting an activation pattern for the light source array included in the light transmitting part, and the controller may control an operating state by setting an activation pattern for the photodetector array included in the light receiving part.

The controller may set an activation pattern for the light source array by using at least one of the arrangement structure of the light source array and the alignment coefficient, and the controller may set an activation pattern for the photodetector array by using the set activation pattern for the light source array.

In the case of a lidar sensor including a light transmitting part including a light source array in which an arrangement design having an (M+a) * N structure is controlled based on the preset alignment coefficient a, the controller may set an activation pattern so that light sources included in (x+a) * y are simultaneously operated by applying the alignment coefficient a to the number (x) of rows (lines) of the light source array that are simultaneously operated and controlled in a preset manner based on the preset driving scheme and by using the number (y) of columns of the light source array that are simultaneously operated and controlled in a preset manner.

Continuing the above-described embodiment, in the case of the 1D addressable scheme, which is a driving scheme in which the light source and the photodetector operate sequentially, one row at a time, when the preset alignment coefficient a is 1, as illustrated in FIG. 3, the light sources included in (1+1) * N are simultaneously operated and controlled, and the photodetectors included in 1 * Q are simultaneously operated and controlled.

In still another example, in the case of the 1D addressable scheme, which is a driving scheme in which the light source and the photodetector operate sequentially, one row at a time, when the preset alignment coefficient a is 2, as illustrated in FIG. 4, the light sources included in (1+2) * N are simultaneously operated and controlled, and the photodetectors included in 1 * Q are simultaneously operated and controlled.

In this case, the controller may control optical power of the light sources operated in accordance with the set activation pattern in consideration of optical power for each of the light sources of the light source array included in the light transmitting part.

In detail, the controller may analyze overall optical power (reference optical power) in accordance with the basic activation pattern set such that the light sources included in x * y are simultaneously operated by using the number (x) of rows (lines) of the light source array that are simultaneously operated and controlled in a preset manner based on the preset driving scheme of the lidar sensor and using the number (y) of columns of the light source array that are simultaneously operated and controlled in a preset manner.

In this case, the analyzed reference optical power may be optical power in accordance with the typical lidar sensor.

Further, the controller may analyze overall optical power (control optical power) in accordance with an activation pattern set such that light sources included in (x+a) * y are simultaneously operated by a lidar sensor including a light transmitting part including a light source array in which an arrangement design having an (M+a) * N structure is controlled.

Naturally, because the number of light sources in which the preset activation pattern is operated so that the light sources included in (x+a) * y are simultaneously operated is large, the analyzed overall optical power is inevitably high.

However, in this case, because a loss of received optical power for each pixel of the photodetector array may occur, the controller may control optical power of each of the light sources in which the activation pattern for generating the control optical power is operated so that the control optical power is consistent with the reference optical power.

That is, the controller may control optical power of (1 + a) * N light sources so that there is no difference between optical power in case that 1 * N light sources are operated and optical power in case that (1 + a) * N light sources are operated.

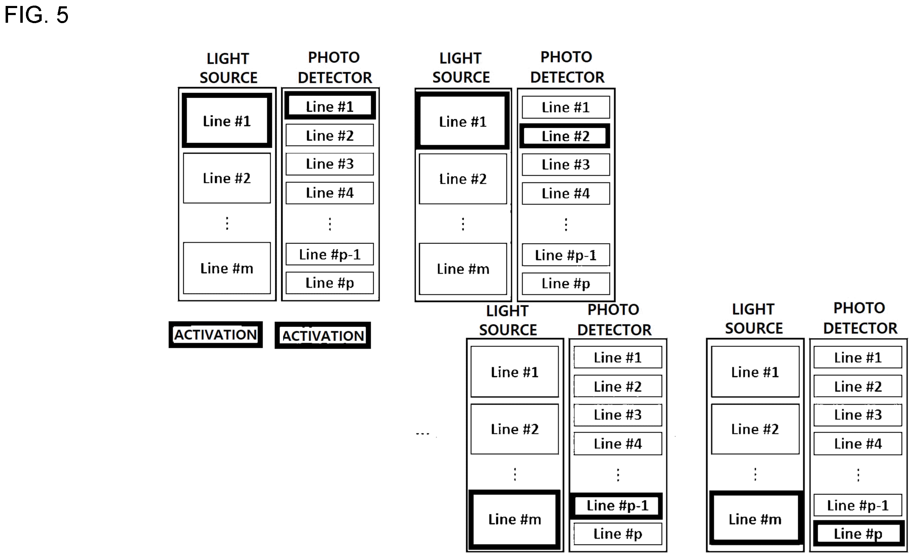

With reference to an additional embodiment related to the lidar sensor operated based on the 1D addressable scheme, in case that the light source array and the photodetector array are configured in different arrangements (2M = P, N = Q), i.e., in case that light sources in a 1 * N arrangement correspond to photodetectors in a 2 * Q arrangement, as illustrated in FIG. 5, the photodetectors in one line and two lines are sequentially operated while the light sources in one line are operated.

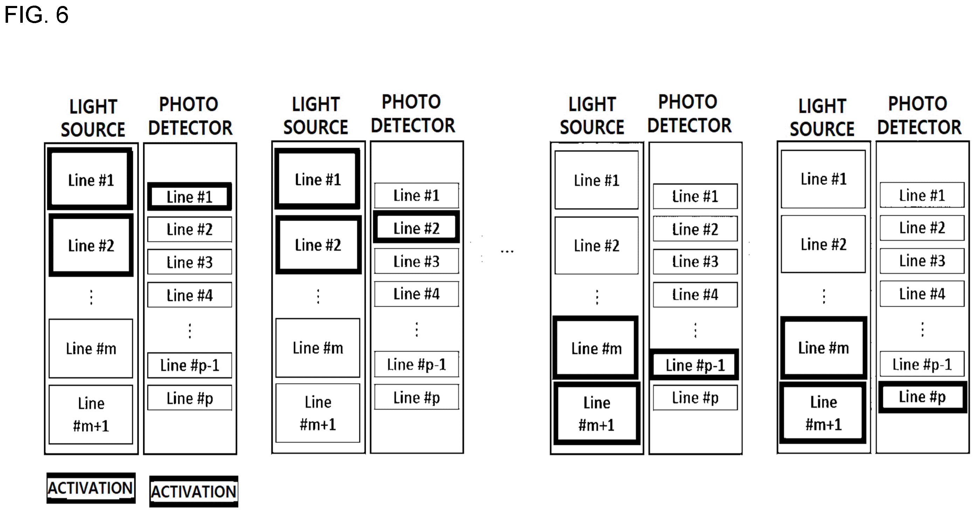

Even in this case, as illustrated in FIG. 6, in the lidar sensor capable of securing a tolerance margin for optical alignment according to the embodiment of the present invention, the arrangement structure of the light source constituting the light source array may be controlled and designed based on at least one preset alignment coefficient.

Likewise, in the lidar driving system for securing a tolerance margin for optical alignment according to the embodiment of the present invention that controls the lidar sensor having the arrangement structure of the light source illustrated in FIG. 6, the controller may set the activation pattern so that the light sources included in (x+a) * y are simultaneously operated by applying the alignment coefficient a to the number (x) of rows (lines) of the light source array that are simultaneously operated and controlled in a preset manner based on the preset driving scheme and by using the number (y) of columns of the light source array that are simultaneously operated and controlled in a preset manner.

As illustrated in FIG. 6, the light sources included in (1+1) * N are simultaneously operated and controlled, and the photodetectors included in 1 * Q are simultaneously operated and controlled.

In this case, based on the preset driving scheme, the photodetectors in one line and two lines are sequentially operated while the light sources in one to two lines are simultaneously operated.

Even in this case, the controller may control optical power of the light sources operated in accordance with the set activation pattern in consideration of optical power for each of the light sources of the light source array included in the light transmitting part.

In detail, the controller may analyze overall optical power (reference optical power) in accordance with the basic activation pattern set such that the light sources included in x * y are simultaneously operated by using the number (x) of rows (lines) of the light source array that are simultaneously operated and controlled in a preset manner based on the preset driving scheme of the lidar sensor and using the number (y) of columns of the light source array that are simultaneously operated and controlled in a preset manner.

In this case, the analyzed reference optical power may be optical power in accordance with the typical lidar sensor.

Further, the controller may analyze overall optical power (control optical power) in accordance with an activation pattern set such that light sources included in (x+a) * y are simultaneously operated by a lidar sensor including a light transmitting part including a light source array in which an arrangement design having an (M+a) * N structure is controlled.

Naturally, because the number of light sources in which the preset activation pattern is operated so that the light sources included in (x+a) * y are simultaneously operated is large, the analyzed overall optical power is inevitably high.

However, in this case, because a loss of received optical power for each pixel of the photodetector array may occur, the controller may control optical power of each of the light sources in which the activation pattern for generating the control optical power is operated so that the control optical power is consistent with the reference optical power.

That is, the controller may control optical power of (1 + a) * N light sources so that there is no difference between optical power in case that 1 * N light sources are operated and optical power in case that (1 + a) * N light sources are operated.

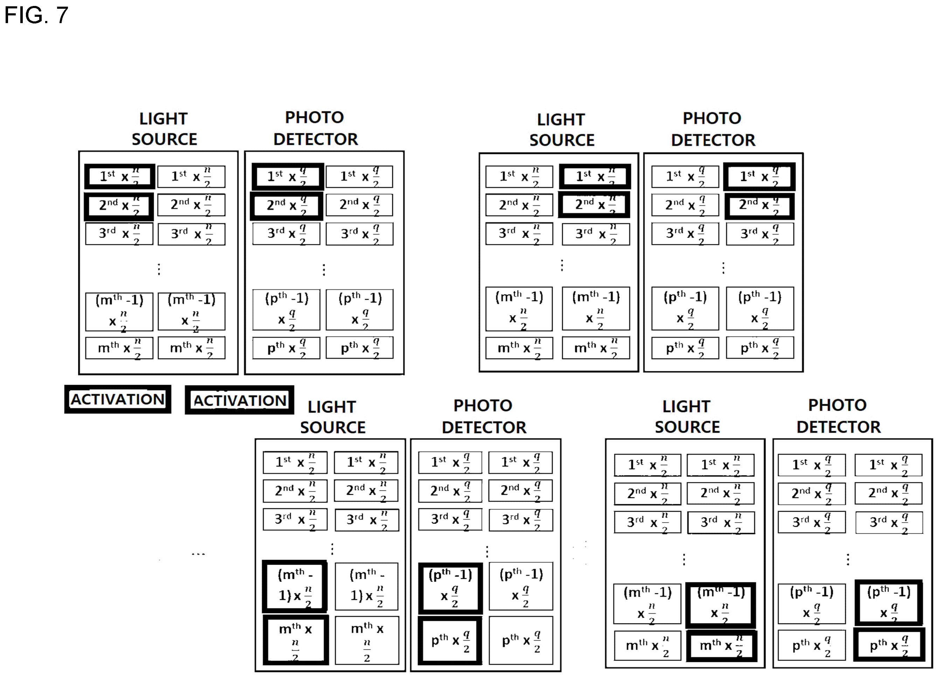

In addition, in the 2D addressable scheme, as illustrated in FIG. 7, in case that the light source array and the photodetector array are configured in the same arrangement (M = P, N = Q), all the light sources in M_i * N_j, i.e., the preset driving region are operated and controlled to simultaneously emit light, and all light detection elements in P_i * Q_j are correspondingly operated and controlled to simultaneously detect light.

Because all the light sources in one row are not necessarily operated, activation patterns are sequentially set in horizontal and vertical directions based on the driving region, and driving control is performed, as illustrated in FIG. 7.

In detail, in case that M_i = P_i, N_j = Q_j, M_i = M/2, and N_i = 2N, an activation pattern illustrated in FIG. 7 is set.

Even in this driving scheme, precise alignment between the light source and the photodetector line by line is required to maximize performance of the lidar sensor.

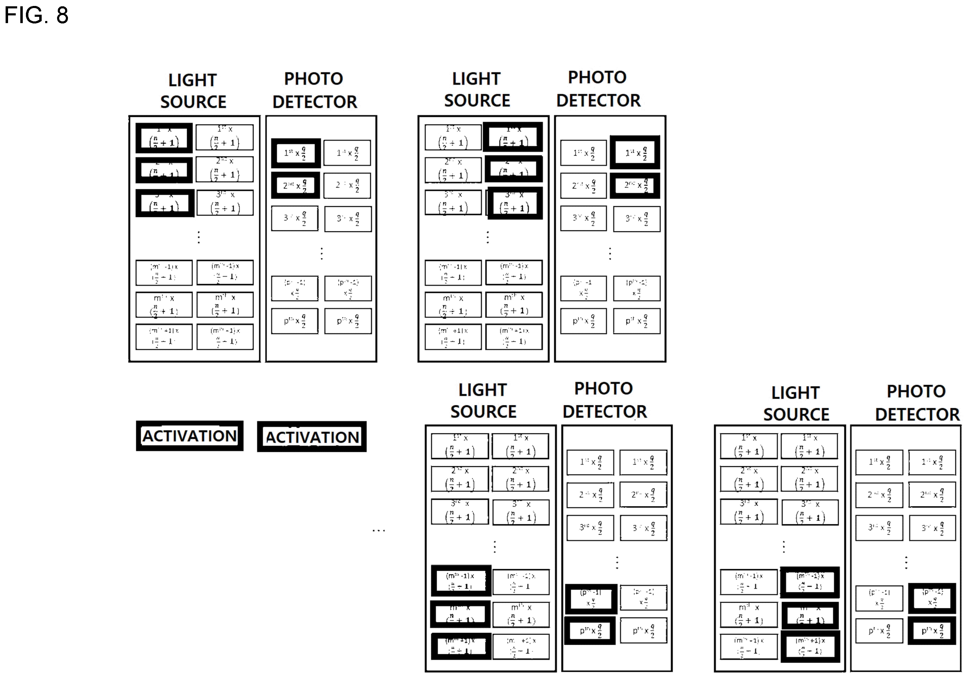

In order to eliminate difficulty in precise alignment, as illustrated in FIG. 8, in the lidar sensor capable of securing a tolerance margin for optical alignment according to the embodiment of the present invention, the arrangement structure of the light source constituting the light source array may be controlled and designed based on at least one preset alignment coefficient.

That is, like a typical lidar sensor, the lidar sensor capable of securing a tolerance margin for optical alignment according to the embodiment of the present invention includes the light transmitting part including the light source array arranged in the M * N structure, and the light receiving part including the photodetector array arranged in the P * Q structure.

In this case, as described above, in the typical lidar sensor, the light source array and the photodetector array are configured in the same arrangement.

In contrast, the lidar sensor capable of securing a tolerance margin for optical alignment according to the embodiment of the present invention includes the light source array in which the arrangement structure of the light source is newly controlled and designed based on at least one preset alignment coefficient.

In detail, in case that the preset driving scheme of the corresponding lidar sensor is the two-dimensional addressable scheme, the light transmitting part may include a light source array in which an arrangement design having an (M_i + a) * (N_j + b/2) structure is controlled based on preset alignment coefficients a and b.

In this case, the alignment coefficients a and b may be set in accordance with predicted noise in consideration of preset basic specifications of the lidar sensor.

For example, in case that the preset alignment coefficient a is 1 and the preset alignment coefficient b is 2, the lidar sensor capable of securing a tolerance margin for optical alignment according to the embodiment of the present invention, as illustrated in FIG. 8, includes a light transmitting part including a light source array arranged in an (M_i+1) * (N_j + 1) structure, and a light receiving part including a photodetector array arranged in a P_i * Q_j structure.

Even in this case, because all the light sources in one row are not necessarily operated, activation patterns are sequentially set in the horizontal and vertical directions based on the driving region, and driving control is performed, as illustrated in FIG. 8.

In detail, an activation pattern illustrated in FIG. 8 is set in case that N_j = Q_j, M_i = M/2, N_i = 2N, the preset alignment coefficient a is 1, and the preset alignment coefficient b is 2.

Further, even this case, the controller may control optical power of the light sources operated in accordance with the set activation pattern in consideration of optical power for each of the light sources of the light source array included in the light transmitting part.

In detail, the controller may analyze overall optical power (reference optical power) in accordance with the basic activation pattern set such that the light sources included in x * y (i.e., M_i * N_j) are simultaneously operated by using the number (x) of rows (lines) of the light source array that are simultaneously operated and controlled in a preset manner based on the preset driving scheme of the lidar sensor and using the number (y) of columns of the light source array that are simultaneously operated and controlled in a preset manner.

In this case, the analyzed reference optical power may be optical power in accordance with the typical lidar sensor.

Further, the controller may analyze overall optical power (control optical power) in accordance with an activation pattern set such that light sources included in (x+a) * (y+b/2) are simultaneously operated by a lidar sensor including a light transmitting part including a light source array in which an arrangement design having an (M_i + a) * (N_j + b/2) structure is controlled.

Naturally, because the number of light sources in which the preset activation pattern is operated so that the light sources included in (x+a) * (y+b/2) are simultaneously operated is large, the analyzed overall optical power is inevitably high.

However, in this case, because a loss of received optical power for each pixel of the photodetector array may occur, the controller may control optical power of each of the light sources in which the activation pattern for generating the control optical power is operated so that the control optical power is consistent with the reference optical power.

That is, the controller may control optical power of (M_i + a) * (N_j + b/2) light sources so that there is no difference between optical power in case that M_i * N_j light sources are operated and optical power in case that (M_i + a) * (N_j + b/2) light sources are operated.

A lidar device capable of securing a tolerance margin for optical alignment including the above-mentioned technical features may include a light transmitting part including a light source array having M light source lines sequentially arranged, and a light receiving part including a photodetector array including P sensing lines sequentially arranged, the light receiving part being configured to receive an optical signal emitted from the light source line and reflected by an object, and (1+a) light source lines, among the M light source lines of the light transmitting part, are activated, such that one of the P sensing lines of the light receiving part may be activated, and a is a natural number. This may be implemented by means of a one-dimensional addressable VCSEL.

In addition, a lidar device may include a light transmitting part including light sources having an M * N arrangement, and a light receiving part including sensors having a P * Q arrangement, the light receiving part being configured to receive an optical signal emitted from the light transmitting part and reflected by an object, and (a+b) light sources, among the M * N light sources of the light transmitting part, are activated, such that b light source lines, among the P * Q sensors of the light receiving part, may be activated, and a and b may be natural numbers. This may be implemented by means of a two-dimensional addressable VCSEL.

The present invention described above may be implemented as a computer-readable code on a medium on which a program is recorded. The computer-readable medium includes all kinds of storage devices for storing data readable by a computer system. Examples of the computer-readable media include hard disk drive (HDD), solid state disk (SSD), silicon disk drives (SDD), ROM, RAM, CD-ROM, magnetic tape, floppy disc, and optical data storage device and also include one implemented in the form of a carrier wave (e.g., transmission over the Internet). In addition, the computer may include the lidar driving system for securing a tolerance margin for optical alignment of the present invention.

While the exemplary embodiments of the present invention have been described above, the embodiments disclosed in the present invention are merely illustrative without limiting the technical spirit of the present invention. Therefore, the technical spirit of the present invention includes not only each of the disclosed embodiments, but also a combination of the disclosed embodiments, and furthermore, the scope of the technical spirit of the present invention is not limited by these embodiments. Furthermore, those skilled in the art to which the present invention pertains may make a number of changes and modifications to the present invention without departing from the spirit and scope of the appended claims, and all such appropriate changes and modifications should be considered as equivalents falling within the scope of the present invention.

## Claims

1. A lidar sensor configured to secure a tolerance margin for optical alignment, the lidar sensor comprising: a light transmitting part comprising one or more light source arrays arranged in an M * N structure; and
a light receiving part comprising a photodetector array arranged in a P * Q structure,
wherein the light transmitting part comprises a light source array, among the one or more light source arrays, in which an arrangement structure is controlled and designed based on one or more preset alignment coefficients.

2. The lidar sensor of claim 1, wherein the light transmitting part comprises a light source array, among the one or more light source arrays, in which an arrangement design having an (M+a) * N structure is controlled when a preset driving scheme of the lidar sensor is a one-dimensional addressable scheme, and
wherein "a" is an alignment coefficient among the one or more preset alignment coefficients.

3. The lidar sensor of claim 1, wherein the light transmitting part comprises a light source array in which an arrangement design having an (M+a) * (N+2/b) structure is controlled when a preset driving scheme of the lidar sensor is a two-dimensional addressable scheme, and
wherein a and b are alignment coefficients among the one or more preset alignment coefficients.

4. The lidar sensor of claim 1, wherein the one or more preset alignment coefficients are based on preset basic specifications of the lidar sensor.

5. A driving system configured to secure a tolerance margin for optical alignment for the lidar sensor comprising the light transmitting part and the light receiving part according to any one of claims 1 to 4, the driving system comprising:
a controller configured to:
control an operating state by setting an activation pattern for the light source array included in the light transmitting part;
control an operating state by setting an activation pattern for the photodetector array included in the light receiving part;
set the activation pattern for the light source array by using at least one of the arrangement structure of the light source array and the one or more preset alignment coefficients; and
set the activation pattern for the photodetector array by using the activation pattern for the light source array set by the light transmitting part.

6. The driving system of claim 5, wherein, when a driving scheme of the lidar sensor preset by the light transmitting part is a one-dimensional addressable scheme, the controller is further configured to:
set an activation pattern so that light sources included in (x+a) * y are simultaneously operated by applying an alignment coefficient "a" to the number (x) of rows or lines of the light source array that are simultaneously operated and controlled in a preset manner based on the driving scheme and using the number (y) of columns of the light source array that are simultaneously operated and controlled in a preset manner.

7. The driving system of claim 5, wherein, when a driving scheme of the lidar sensor preset by the light transmitting part is a two-dimensional addressable scheme, the controller is further configured to:
set an activation pattern so that light sources included in (x+a) * (y+2/b) are simultaneously operated by applying an alignment coefficient "a" to the number (x) of rows (lines) of the light source array that are simultaneously operated and controlled in a preset manner based on the driving scheme and applying an alignment coefficient "b" to the number (y) of columns of the light source array that are simultaneously operated and controlled in a preset manner.

8. The driving system of claim 5, wherein the controller is further configured to set an activation pattern so that corresponding photodetectors are simultaneously operated by using the rows and columns of the photodetector array that are simultaneously operated and controlled in a preset manner in accordance with reception region information preset by the light receiving part.

9. The driving system of claim 5, wherein, in consideration of optical power for each light source of the light source array included in the light transmitting part, the controller is further configured to:
use the number (x) of rows or lines of the light source array, which are simultaneously operated and controlled in a preset manner based on a preset driving scheme, and the number (y) of columns of the light source array, which are simultaneously operated and controlled in a preset manner and control optical power of the light source operated by the activation pattern for the set light source array so that overall optical power by a basic activation pattern, which is set such that light sources included in x * y are simultaneously operated, is consistent with overall optical power by the activation pattern for the set light source array.

10. A lidar device comprising:
a light transmitting part comprising a light source array having M light source lines that are sequentially arranged; and
a light receiving part comprising a photodetector array having "P" sensing lines that are sequentially arranged, the light receiving part being configured to receive an optical signal emitted from the light source line and reflected by an object,
wherein (1+a) light source lines, among the M light source lines of the light transmitting part, are activated, such that one of the P sensing lines of the light receiving part is activated, and
wherein "a" is a natural number.

11. A lidar device comprising:
a light transmitting part comprising light sources having an M * N arrangement; and
a light receiving part comprising sensors having a P * Q arrangement, the light receiving part being configured to receive an optical signal emitted from the light transmitting part and reflected by an object,
wherein (a+b) light sources, among the M * N light sources of the light transmitting part, are activated, such that b light source lines, among the P * Q sensors of the light receiving part, are activated, and
wherein "a" and "b" are natural numbers.
